# EUROPEAN PATENT SPECIFICATION

(11) **EP 4 480 783 B1**
(45) Date of publication and mention of the grant of the patent: **04.02.2026**
(21) Application number: 24183368.0
(22) Date of filing: 20.06.2024
(51) Int. Cl.: B62B 1/00, B62B 1/12, B62B 1/14, B62B 5/06, B62B 7/02, B62B 5/04

(54) **HIKERWHEEL**
HÄKERRAD
ROUE DE HIERKER

(30) Priority: 22.06.2023 SE 2350769
(43) Date of publication of application: 25.12.2024
(73) Proprietor: Hikerwheel AB, 832 93 Frösön (SE)
(72) Inventor: Kjellsson, Nils, 832 93 Frösön (SE)
(74) Representative: AWA Sweden AB

(56) References cited:
- EP-A1- 1 688 335
- AU-A4- 2006 100 103
- AU-A4- 2006 100 912
- CN-A- 107 792 125
- CN-A- 114 303 548
- CN-U- 205 344 929
- CN-U- 212 267 516
- US-A- 2 992 834
- US-A1- 2010 270 764
- US-A1- 2020 385 038

## Description

### Field of the invention

The present invention relates to a carrier for transporting loads such as children over rough terrain and a method for assembling a carrier for transporting loads over rough terrain. More specifically, the invention relates to a man driven carrier intended for use in in hiking, camping, and the like, to facilitate the transportation of loads such as children on narrow trails and over rough terrain. This carrier provides a degree of manoeuvrability, balance, and ease of use heretofore unattainable.

### Background of the invention

The popularity of hiking and camping and the availability of backpacks for enhancing the comfort of trips into the mountains and other recreational areas emphasize the problems of transporting supplies into remote areas over narrow trails and rough terrain. The common practice is to carry all such supplies in backpacks, and these backpacks have been improved to the extent that they support larger loads and are organized to carry the essentials for camping. However, the weight of the supplies supported by the hikers using a backpack is burdensome and constitutes a restriction on the distances which can be travelled in a given period of time. In the prior art, carts have been designed for carrying game or injured people out of remote areas, but such carts have been of designs not satisfactory for use by hikers as a substitute for a backpack. Single-wheeled carts designed to make it easier to carry heavy equipment, supplies, etc. over rough terrain, such as hiking trails, are previously known in the art. These have, however, failed to gain wide popularity since the load is often carried between the wheel and the user, and the major weight needs to be carried by the user's arms or torso. Many of the carts further consist of numerous components, such as bicycle bags, which limit the packable space and increase both weight and complexity of the carts, thereby complicating the repair process and posing challenges in terms of availability of spare parts. Various carriers are known in the prior art. For instance, EP1688335A1 discloses a cart (or chariot) providing chassis, a wheel and a shaft and handles for manoeuvring said carrier. Other carriers disclosed in the art are for example disclosed in AU2006100103A4 and US2992834A.

### Summary of the invention

It is an object to mitigate, alleviate or eliminate one or more of the above-identified deficiencies in the art and disadvantages singly or in any combination. It is further an object of the invention to provide a carrier which may be handled in a simple and quick manner, and which is highly manoeuvrable and stable under load.

The invention is defined in the independent claims.

According to a first aspect of the invention, there is provided a carrier for transporting loads over rough terrain. The carrier comprises an elongated load carrying frame comprising a first load carrying surface, a second load carrying surface, and a wheel receiving portion arranged between the first load carrying surface and the second load carrying surface. The carrier further comprises a wheel releasably arrangeable at the wheel receiving portion of the load carrying frame and a steering device for steering the carrier, pivotally arranged at the load carrying frame. The first load carrying surface and the second load carrying surface are elongated and arranged in a same first plane and the wheel is arrangeable perpendicularly to the first plane and with its centre of rotation essentially in the first plane.

The design of the carrier, specifically the arrangement of the load carrying surfaces and the wheel in relation to the first plane, optimizes the vertical height of the centre of mass of the load with respect to the ground clearance and width, and balances the centre of mass of the load close to the axis of rotation of the wheel, thereby making the carrier highly manoeuvrable and stable under load. The load carrying surfaces are thus arranged so that the load can be balanced close to the axis of rotation of the wheel. In some embodiments, the load carrying surfaces extend beyond the wheel both in front of and behind the wheel. The carrier comprising a releasably arrangeable wheel, and the steering device pivotally arranged at the load carrying frame further has the advantage that it may be handled and adjusted in a quick and easy manner and that it may be disassembled into a transport/storage position in a likewise quick and easy manner. For disassembly into the transport/storage position, the wheel can thus be released from the wheel receiving portion of the load carrying frame, and the steering device pivoted to a position essentially in the first plane, or in a plane parallel thereto, thus providing a foldable carrier with very compact dimensions in its disassembled transport/storage position. The diameter of the wheel is advantageously relatively large for improving the carrier's ability to easily roll over obstacles in rough terrain, which may provide improved manoeuvrability and stability.

The carrier's ability to provide for comfortable and safe load carrying surfaces makes it highly suitable for carrying children. The first and second load carrying platforms may for example be made of fabric or another soft material, which makes them comfortable for a child to sit or lay down on. The first and second load carrying platform being positioned essentially in the first plane, and thus situated close to the ground, allows for a relatively safe position for seating a child. In the event that the child would fall off the carrier, the fall would be rather short.

According to the invention, the steering device comprises a bar extending longitudinally from a first end, which first end is arranged at the load carrying frame, to a second end and wherein the steering device further comprises a handlebar arranged at the second end of the bar. The steering device is arranged at a rear end of the load carrying frame. This is advantageous in that it allows a user to push the carrier forward by the steering device.

The handlebar may be arranged so that a user can pull or push the carrier with his/her hands in a position so that the backs of the hands are facing upwards. This allows the user to raise or lower the handlebar vertically upwards or downwards while maintaining a good grip/manoeuvrability of the carrier, which may be advantageous in steep terrain. According to the invention, the steering device comprises a bar extending longitudinally from a first end, which first end is centrally arranged at the load carrying frame, to a second end and wherein the steering device further comprises a handlebar arranged at the second end of the bar. The carrier may be intended for carrying children, which is a relatively light load. When carrying a relatively light load, such as a child, a relatively small amount of leverage is required to be generated from a user to manoeuvre the carrier reliably. This makes it possible to implement a centralised steering device without depriving the users of the ability to generate necessary amount of leverage to manoeuvre the carrier reliably (as opposed to using two decentralised handles), which, when carrying light loads, may only provide the user with an excessive amount of leverage.

Furthermore, centralising the steering device at the load carrying frame is advantageous for avoiding the strong torque that may occur, for example between two decentralised handles (as with a wheelbarrow) when manoeuvring the carrier. This reduces the stressing forces acting on the load carrying frame, which enables a lightweight structural design, further improving the manoeuvrability of the carrier. In addition, reducing the amount of torque acting on the load carrying frame reduces the amount of structural flexing/bending of said load carrying frame. This further improves manoeuvrability of the carrier because by maintaining its shape under load, the carrier allows for precise control and efficient energy transfer from the user to the carrier. Even further, as opposed to having two decentralised handles, having a centralised steering device allows for a smaller turning radius because the user's hands are more centralised/closer to the rotational point of the carrier/wheel. This may be advantageous for manoeuvring the carrier as a user may more easily manoeuvre it past technically difficult and/or narrow terrain.

According to the invention, the steering device is pivotally movable between a folded position, in which the steering device extends in parallel with the first plane, and an extended position, in which the steering device extends in a plane at an angle to the first plane. In the extended position, the steering device is arranged such that the carrier is manoeuvrable by a user by holding the handlebar and adding a force essentially horizontal to the plane, i.e., the user does not have to lift the load but may simply push the carrier forward while holding the handlebar. Thereby, the weight in the handlebar from the load is reduced compared with prior art solutions in which the load needs to be lifted, such as with a wheelbarrow. This makes the carrier highly manoeuvrable. In some embodiments, the bar may further be adjustable in the longitudinal direction to adjust to the height and preferences of a user.

Also, when having a centralised steering device, a single longitudinal bar may thus be used for providing a user with means to manoeuvre the carrier. Having a single longitudinal bar may be further advantageous since only a single pivoting joint is required to make the steering device pivotally movable relative the load carrying frame.

In accordance with an embodiment, the carrier further comprises a support member for the carrier, removably arrangeable at the carrier. The support member is arranged to provide support for the carrier when not held by a user, such that it can stand upright, i.e., with the load carrying surfaces essentially parallel with the ground, even when not held by the user. This facilitates loading and unloading of the carrier. It is further advantageous in that it provides comfort for a user handling the carrier, being able to let go of the carrier when needed.

In accordance with an embodiment of the carrier, the support member is pivotally arrangeable at the carrier and comprises support legs, which support legs are pivotally movable between a support providing position and at least one non-support providing position. At least one non-support providing position comprises a position in which the support legs extend in parallel with the first plane and, in the support providing position, the support legs extend in a plane essentially perpendicular to the first plane. The support member enables the carrier to stand stable and safe in the support providing position, thereby making the carrier easy to load and unload. The pivotally movable support legs allow for a stable and easy adjustment between the support providing position and the non-support providing position.

In some embodiments, two support legs are provided, each pivotally arranged at the rear end of the carrier. Providing support legs at the rear end of the carrier prevents the carrier from pivoting rearwards when not held by a user. In some embodiments, the support member is arranged at the steering device at the rear end of the carrier. This allows a user of the carrier to move the support member between the non-support providing position and the support providing position without letting go of steering device of the carrier.

In some embodiments, two support legs are provided, each removably arranged at a front end of the carrier. Providing support legs at the front end of the carrier prevents the carrier from pivoting forwards when not held by a user. Providing support legs both at the rear end and at the front end of the carrier is, naturally, also possible within the concept of the present disclosure, as is providing pivotally arranged support legs at the front end of the carrier and removably arrangeable support legs at the rear end of the carrier. Further support members may also, optionally, be provided at different positions along the elongated extension of the load carrying frame to provide support and prevent the carrier from pivoting sidewards when not supported by a user.

In accordance with an embodiment, the carrier further comprises a spoke protection assembly, releasably arrangeable at the load carrying frame and arrangeable to partly cover the wheel when arranged at the wheel receiving portion. The spoke protection assembly is configured to secure that no part of the load is interacting with the wheel, thereby making the carrier safe in use.

In accordance with an embodiment of the carrier, the spoke protection assembly is foldable into the first plane. This facilitates the assembly and disassembly of the carrier, making it quick and easy.

In accordance with an embodiment, the carrier further comprises a brake assembly including a brake controller arranged at the steering device and a brake actuator arranged between the first load carrying surface and the second load carrying surface, wherein the brake actuator is disengageably coupled to the wheel and operably connected to the brake controller. An integral, highly efficient brake allows the operator to variably slow down or completely halt the carrier while in motion, or to lock the brake for parking on steep grades.

In accordance with an embodiment, the brake actuator is a rim brake or a disc brake.

In accordance with an embodiment, the wheel comprises a hub and a quick release mechanism arranged at the hub, and the wheel receiving portion has two protrusions extending perpendicularly from the first plane, each protrusion comprising a slot configured to receive the quick release mechanism. The quick release mechanism arranged at the hub enables a quick and easy arrangement and/or dismantling of the wheel at the carrier, making the assembly and disassembly of the carrier quick and easy.

In accordance with an embodiment, the first load carrying surface and the second load carrying surface each comprises an outer frame and a load carrying platform extending over the frame. In some embodiments, the load carrying platforms are made of a durable fabric. The load carrying platforms may further be detachable from the respective outer frame such that the load carrying platform can be removed for exchange, repair, or cleaning. In accordance with an embodiment, the carrier further comprises a seat assembly, such as a foldable seat, or such as a seat for carrying a child, arranged at one of the first and the second load carrying surfaces. The seat assembly may be removably arranged at at least one of the first and the second load carrying surfaces. The seat assembly may further comprise a wind shield and a back support suitable for a child. This provides a carrier suitable for carrying a child in a comfortable manner, both for the child and for the user manoeuvring the carrier.

In accordance with an embodiment, each of the first load carrying surface and the second load carrying surface is elongated in a direction perpendicular to the axis of rotation of the wheel, such to extend along the radial extension of the wheel in the first plane when the wheel is mounted at the carrier. This allows centrally arranging a load at the first and second load carrying surfaces, making the carrier stable to manoeuvre.

In accordance with an embodiment, the load carrying frame comprises a front portion and a rear portion. The steering device may in a preferred embodiment be arranged at the rear portion of the load carrying frame. A width of each of the first and second load carrying surfaces may in some embodiments be greater at the rear portion of the load carrying frame than at the front portion of the load carrying frame. A greater width at the rear portion in comparison to the front portion of the first and second load carrying frame is advantageous to serve as a guide, such that when loading the carrier, the mass of the load is closer to the axis of rotation of the wheel, making the carrier easier to balance and manoeuvre in rough terrain. Furthermore, providing a smaller width of the first and second load carrying surfaces, and thus of the carrier, at the front portion than at the rear portion may be advantageous for the mobility and accessibility of the carrier in dense terrain. However, providing a load carrying frame of rectangular shape, with essentially the same width at the front portion as at the rear portion, is also conceivable within the concept of the present invention.

In accordance with an embodiment, the carrier may further comprise a grip portion arranged at the front portion of the load carrying frame. The grip portion may for example be centrally arranged at the front end of the load carrying frame, to provide a balanced grip portion. The grip portion allows assistance in lifting and carrying the carrier when transporting the carrier in demanding terrain. The grip portion may constitute an attachment point for other helping/assisting elements, such as a harness or a towrope configured to, when pulled by a user, help the carrier forward on inclines or otherwise difficult terrain.

In accordance with an embodiment, the load carrying frame comprises a plurality of load securing elements. The load securing elements may be used to secure any load arranged on the first and/or second load carrying surfaces to the carrier, such that it does not fall off during travel. In some embodiments, the load securing elements are laterally distributed along the elongated extension of the first and second load carrying surfaces. The plurality of load securing elements may for example be securing rings through which ropes can be arranged and tied to secure the load to the carrier. Alternatively, load securing elements arranged along one lateral end of the first and second load carrying surfaces may be constituted by ropes fastened to the load carrying frame, whereas load securing elements arranged along the opposing lateral end of the first and second load carrying surfaces, respectively, may be constituted by securing rings at which the ropes may be fastened to thereby secure a load to the carrier. The plurality of securing elements may also be female buckle straps arranged along one lateral end of the first and second load carrying surfaces and male buckle straps arranged along the opposing lateral end of the first and second load carrying surfaces, respectively. The buckle straps provide an efficient way to fasten different types of loads to the load carrying frame. Providing other kinds of load securing elements is also conceivable within the concept of the present invention. The load securing elements allows arranging a wide variety of loads on the carrier and fastening the same thereat.

In some embodiments, the carrier further comprises packing bags for each of the load carrying surfaces which can be secured to the load carrying frame by the load securing elements. For example, bags particularly adapted for carrying a child can be provided and secured to the carrier, allowing transport of a child in a comfortable and weather protected manner on trails and in rough terrain.

According to a second aspect of the invention, a method for mounting a pre-assembled carrier for transporting loads over rough terrain is provided. The method comprises the step of providing a pre-assembled carrier comprising a load carrying frame defining a first load carrying surface, a second load carrying surface, and a wheel receiving portion arranged between the first load carrying surface and the second load carrying surface. The first load carrying surface and the second load carrying surface are arranged in a same first plane. The load carrying frame further comprises a steering device pivotally arranged at the load carrying frame in a folded position, in which the steering device extends in parallel with the first plane.

The steering device comprises a bar extending longitudinally from a first end, which first end is centrally arranged at a rear portion of the load carrying frame, to a second end and the steering device further comprising a handlebar arranged at the second end of the bar.

The method further comprises the step of pivotally moving the steering device to an extended position in which the steering device extends in a plane at an angle to the first plane. The method further comprises the step of releasably arranging a wheel at the wheel receiving portion of the load carrying frame such that the centre of rotation of the wheel is essentially in the first plane. This provides an efficient mounting of the pre-assembled carrier.

According to an embodiment, the method further comprises removably arranging a support member at the carrier. The support member may e.g., be removably arranged at the load carrying frame of the carrier, or at the steering device of the carrier.

According to an embodiment, the method further comprises removably arranging a spoke protection assembly at the load carrying frame.

According to an embodiment, the step of releasably arranging the wheel comprises releasably arranging the wheel at the wheel receiving portion by means of a quick coupling mechanism.

Effects and features of the second aspect is largely analogous to those described above in connection with the first aspect. Embodiments mentioned in relation to the first aspect are largely compatible with the second aspect. It is further noted that the inventive concepts relate to all possible combinations of features unless explicitly stated otherwise.

A further scope of applicability of the present invention will become apparent from the detailed description given below. However, it should be understood that the detailed description and specific examples, while indicating preferred embodiments of the invention, are given by way of illustration only, since various changes and modifications within the scope of the claims will become apparent to those skilled in the art from this detailed description.

Hence, it is to be understood that this disclosure is not limited to the particular component parts of the device described or steps of the methods described as such device and method may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The disclosure will by way of example be described in more detail with reference to the appended schematic drawings, which show presently preferred embodiments of the invention.
Figure 1 is a perspective view of a carrier according to an embodiment of the present invention.
Figure 2 is a perspective view of a carrier comprising a steering device which is in a folded position according to an embodiment of the present invention.
Figure 3 is a perspective view of a carrier in a transport/storage position according to an embodiment of the present invention.
Figure 4A is a detailed view of a support member of a carrier, wherein the support member is in a support providing position according to an embodiment of the present invention.
Figure 4B is a detailed view of a support member of a carrier, wherein the support member is in a non-support providing position according to an embodiment of the present invention.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the claims to the skilled person.

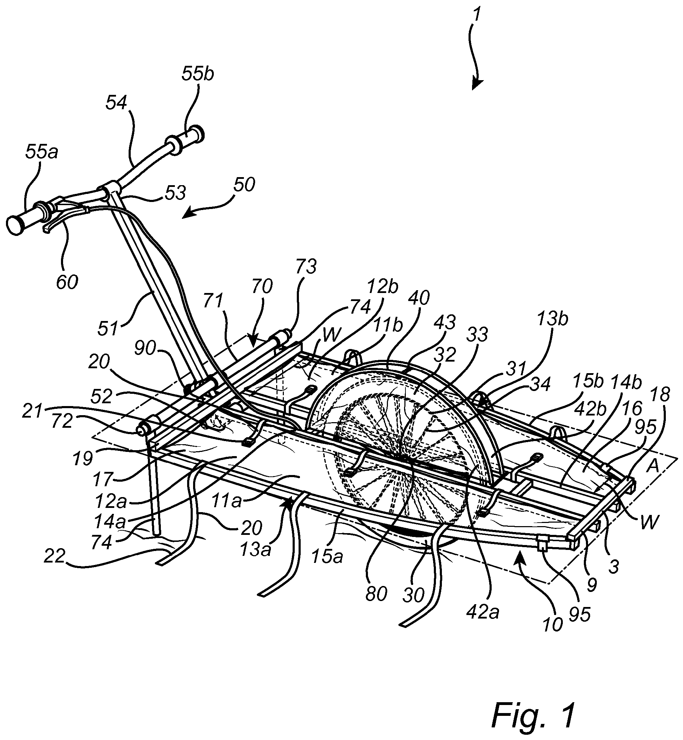

Fig. 1 shows a perspective view of a carrier 1 for transporting loads over rough terrain according to an embodiment of the present invention. The carrier 1 for transporting loads over rough terrain comprises a load carrying frame 10. The load carrying frame 10 comprises a first load carrying surface 11a, a second load carrying surface 11b, and a wheel receiving portion 80 arranged between the first load carrying surface 11a and the second load carrying surface 11b. The carrier 1 further has a wheel 30 releasably arranged at the wheel receiving portion 80 of the load carrying frame 10. The diameter of the wheel 30 is relatively large, preferably at least 60 cm. The carrier 1 further comprises a steering device 50 for steering the carrier 1. The steering device 50 is pivotally arranged at the load carrying frame 10. The steering device 50 is here centrally arranged at the load carrying frame 10. By centrally arranged it may be meant that it is arranged substantially in the middle of two opposing lateral ends of the load carrying frame 10. The steering device 50 can further be described as being arranged at the load carrying frame 10 at a point in line with a radial extension of the wheel 30. Each of the first load carrying surface 11a and the second load carrying surface 11b is elongated and arranged in a same first plane A. The wheel 30 is arranged perpendicularly to the first plane A and with its centre of rotation essentially in the first plane A.

Further, the load carrying frame 10 of the carrier 1 has a front portion 16 and a rear portion 17. A width W of each of the first and second load carrying surfaces 11a, 11b is greater at the rear portion 17 of the load carrying frame 10 than at the front portion 16 of the load carrying frame 10. The steering device 50 is centrally arranged at the rear portion 17 of the load carrying frame 10.

The load carrying surfaces 11a, 11b each comprises an outer frame 13a,13b, having an inner lateral end bar 14a, 14b, typically an aluminium profile, and an outer lateral end bar 15a, 15b, also typically an aluminium profile, and a load carrying platform 12a, 12b extending over the outer frame 13a, 13b. The load carrying frames 13a, 13b are further delimited at the front and rear ends of the load carrying platform 10 by front and rear end bars 9, 19. The load carrying platforms 12a,12b are each attached to the respective outer frame 13a, 13b with removable fasteners such as screws and nuts. Using other fasteners for attaching the load carrying platforms 12a, 12b to the outer frames 13a, 13b is also conceivable within the concept of the present invention. The inner and outer lateral end bars 14a, 14b, 15a, 15b are typically attached to the front and rear end bars 9, 19 by removable fasteners to form the outer frames 13a, 13b. However, said parts may also be welded to form the outer frames 13a, 13b. Providing removable fasteners enables removal of the load carrying platforms 12a, 12b from the outer frames 13a, 13b for cleaning, repair, or exchange of the same, and of the parts of the outer frames 13a, 13b, if needed. The load carrying platforms 12a, 12b may preferably be made out of a durable fabric. The load carrying platforms of the present invention could also be made of for example a polymer material, such as a rubber, or a mesh, such as a cargo mesh. The parts of the outer frames 13a, 13b may be made of aluminium, steel or any other suitable material.

The load carrying frame further provides a plurality of load securing elements 20 laterally distributed along the outer frame 13a, 13b. The plurality of load securing elements 20 may for example be securing rings through which e.g., ropes, straps, or tension belts can be arranged and tied to secure the load to the carrier 1. In the exemplifying embodiment shown in Fig. 1, the plurality of securing elements 20 comprises female buckle straps 21 arranged at the outer lateral end bars 15a, 15b of the outer frames 13a, 13b and male buckle straps 22 arranged at the inner lateral end bars 14a, 14b of the outer frames 13a, 13b. The female and male buckle straps 21, 22 may alternatively be arranged in other suitable configurations within the concept of the present invention.

With further reference to the embodiment of the carrier 1 shown in Fig. 1, the wheel 30 is releasably arranged at the wheel receiving portion 80. The load carrying surfaces 11a, 11b extend on opposite sides of the wheel 30. The load carrying surfaces 11a, 11b are elongated in a direction perpendicular to the axis of rotation of the wheel, and extend along the radial extension of the wheel in the first plane A. The wheel 30 has its centre of rotation essentially in the first plane A. The wheel 30 is composed of a rim 31, at which is mounted a tire 32 and which is interlaced to an interior hub 33 with spokes 34. The rim 31, the hub 32, and the spokes 34 are typically made of aluminium, but may be composed of any other suitable metallic and/or composite material. To easily remove and/or mount the wheel 30 to the carrier 1, a quick release mechanism (not shown in the figures) is arranged at the hub 32.

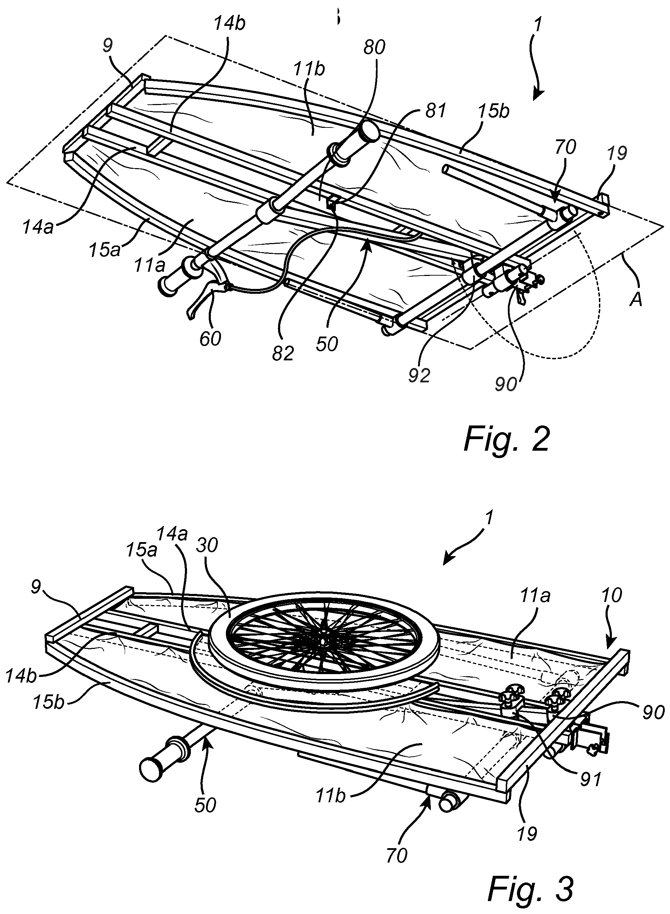

As best seen in Fig. 2 the wheel receiving portion 80 of the carrier 1 comprises two protrusions 81 extending perpendicularly from the first plane A. Each protrusion 81 comprises a slot 82 configured to receive the wheel 30. Particularly, the slot 82 is couplable with a quick release mechanism of the wheel 30. In this embodiment, the centre axel of rotation of the wheel 30, when arranged at the protrusion 81 of the wheel receiving portion 80 is slightly below the plane A, thus essentially in the plane A. Providing an attachment portion for the wheel 30 at the wheel receiving portion 80 in the plane A or slightly above the plane A, thus essentially in the plane A, is also conceivable within the concept of the present invention.

The carrier 1 further comprises a spoke protection assembly 40. The spoke protection assembly 40 here shown comprises first and second spoke protection members 42a, 42b, pivotally and releasably arranged at the load carrying frame 10 at either side of the wheel 30, such that the portion of the wheel 30 extending perpendicularly above and beyond plane A (as seen in Fig. 1) is covered by the spoke protection members 42a, 42b. More particularly, in the shown embodiment, the spoke protection members 42a, 42b are pivotally and releasably arranged at the inner lateral end bars 14a, 14b of the outer frames 13a, 13b of the first and second load carrying surfaces 11a, 11b. The spoke protection members 42a, 42b are in the shown embodiment in the shape of a half-circle. Providing spoke protection members of other shapes, such as a half epsilon, or a rectangular shape, is, however, also conceivable within the concept of the present invention, as is providing a spoke protection member in one piece, extending over both sides of the portion of the wheel 30 projecting above and beyond the first and second load carrying platforms 11a, 11b. The spoke protection members 42a, 42b may be made of a thermoplastic polymer, such as polycarbonate. Providing spoke protection members 42a, 42b of an aluminium composite panel, Plexiglas, plywood, OSB, or any other material suitable for the purpose of covering the spokes of the wheel projecting above and beyond the first and second load carrying platforms 11a, 11b is also conceivable within the concept of the present invention.

The spoke protection assembly 40 further comprises a connector 43 arranged to hold together the spoke protection members 42a, 42b at upper portions thereof. The connector 43 is so arranged to provide stability to the spoke protection assembly. Providing several connectors distributed along the upper portions of the spoke protection members 42a, 42b is also conceivable within the concept of the present invention and provides a more rigid, and thus stable, spoke protection assembly. This is advantageous, for example, when the load arranged on the carrier 1 is such that it presses against the spoke protection members, which then has increased resistance to such load. The spoke protection assembly 40 with spoke protection members 42a, 42b and connector 43 is further advantageous in that the wheel 30 is visible from at least a radial direction for a user manoeuvring the carrier 1. This allows the user to see the wheel 30 from above and thereby efficiently manoeuvre the carrier 1 in rough terrain. The visibility of the wheel 30 for a user is further improved by providing transparent spoke protection members 42a, 42b.

The load carrying frame 10 also comprises a coupling structure 90 for a steering device 50 by which the steering device 50 is pivotally arranged at the rear portion 17 of the load carrying frame 10. The steering device 50 comprises a bar 51 extending longitudinally from a first end 52, which first end is arranged at the load carrying frame 10, to a second end 53. The first end of the bar 51 is centrally arranged at the load carrying frame 10. The bar 51 has a rectangular cross section. Alternatively, the bar 51 may have another cross-sectional shape.

A handlebar 54 is arranged at the second end 53 of the bar 51, and comprises two handles 55a, 55b arranged at respective ends of the handlebar 54. The handlebar 54 may be a handlebar suitable for bicycles. The handlebar 54 essentially extends in a direction perpendicular to the radial direction of the wheel 30. The bar 51 of the steering device 50 is preferably adjustable in the longitudinal direction such to enable adjustment of the length of the bar 51. Alternatively, or additionally, the position of the bar 51 in the coupling structure 90 is adjustable such that the length by which it projects therefrom can be adapted to the height of a user. The steering device 50 is pivotally movable between a folded position (see Fig. 2), in which the steering device 50 extends in parallel with the first plane A, and an extended position (as seen in Fig. 1) in which the steering device 50 extends in a plane at an angle to the first plane A.

The steering device 50 is further provided with a brake controller 60 arranged at either one of the handles 55a, 55b. The brake controller 60 is operatively connected to a brake actuator (not shown) arranged between the first load carrying surface 11a and the second load carrying surface 11b. The brake actuator is arranged such that it is disengageably coupled to the wheel 30, to act on the wheel 30 for breaking when actuated.

Further, the carrier 1 comprises a grip portion 3 centrally arranged at the front end bar 9 of the load carrying frame 10. Providing a grip portion 3 at another position of the load carrying frame 10 is also possible within the concept of the present invention, as is providing several grip portions 3. For example, grip portions 3 may be provided at opposing lateral ends at the front portion 16 of the load carrying frame 10. The grip portion 3 may have an outer cover (not shown in the figure) removably arranged or integrated with the front end bar 9 of the load carrying frame 10 composed of a rubber or foam material or other suitable materials for making the grip portion 3 easy and comfortable to grip.

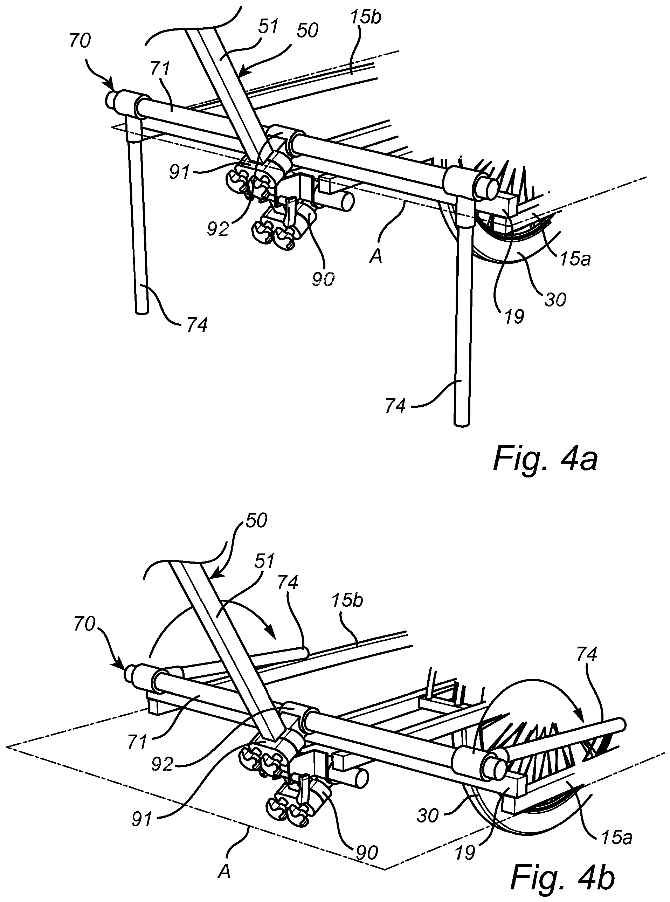

Continuing with reference to the embodiment shown in Fig. 1, the carrier 1 further comprises a support member 70 arranged at the load carrying frame 10. More particularly, in this exemplifying embodiment, the support member 70 is connected to the bar 51 of the steering device 50. The support member 70 has a bar portion 71 extending from a first end 72 to a second end 73 wherein a support leg 74 is connected to each of the first and second ends 72, 73. The support member 70 is configured to provide support for the carrier when arranged in a support providing position, as shown in Fig. 1. The support member 70 is further arrangeable in a folded non-support providing position, as shown in Fig. 2 and as described in more detail with reference to Figs. 4a-b.

Finally, the exemplifying embodiment of the carrier 1 shown in Fig. 1 further comprises support leg coupling elements 95 at the front portion 16 of the load carrying frame 10, which enable attachment of removably arrangeable support legs (not shown) thereat.

With reference to Fig. 2, the carrier 1 described with reference to Fig. 1 is shown wherein the steering device 50 is in a folded position. In the folded position, the steering device 50 is folded down under the load carrying frame 10 and is thus essentially aligned with the first plane A. The support member 70 connected to the steering device 50 is here in the folded non-support providing position.

With reference to Fig. 3, the carrier 1 described with reference to Fig. 1 is shown in a transport/storage position wherein the steering device 50 and the support member 70 are in the folded position, folded down under the load carrying frame 10. The wheel 30 is here dismounted and placed onto the load carrying surfaces 11a, 11b, as is the spoke protection assembly 40. Providing the carrier 1 in the transport/storage position facilitates transport and storage of the carrier 1.

With reference to Figs. 4a-4b, a detail of the carrier 1 described with reference to Fig. 1 is shown wherein the support member 70 is in a support providing position and in a folded non-support providing position, respectively. The support member 70 is coupled to the steering device 50 via a coupler 91 which is connected with the bar 51 of the steering device 50. The coupler 91 comprises a pivot connection portion 92 pivotally connected to the extending bar portion 71 of the support member 70. The support member 70 being pivotally arranged at the steering device 50 enables it to move between the support providing position and the folded non-support providing position. In the support providing position, shown in Fig. 4a, the support legs 74 are essentially perpendicular to the first plane A. In the folded non-support providing position, shown in Fig. 4b, the support legs 74 are essentially parallel to the first plane A.

The person skilled in the art realizes that the present invention by no means is limited to the preferred embodiments described above. On the contrary, many modifications and variations are possible within the scope of the appended claims.

## Claims

1. A carrier (1) for transporting loads such as children over rough terrain, the carrier (1) comprising:
an elongated load carrying frame (10) comprising a first load carrying surface (11a), a second load carrying surface (11b), and a wheel receiving portion (80) arranged between the first load carrying surface (11a) and the second load carrying surface (11b);
a wheel (30) releasably arrangeable at the wheel receiving portion (80) of the load carrying frame (10);
a steering device (50) for steering the carrier (1), pivotally arranged at the load carrying frame (10);
wherein the first load carrying surface (11a) and the second load carrying surface (11b) are elongated and arranged in a same first plane (A) and the wheel (30) is arrangeable perpendicularly to the first plane (A) and with its centre of rotation essentially in the first plane (A),
wherein the steering device (50) comprises a bar (51) extending longitudinally from a first end (52), which first end (52) is centrally arranged at a rear portion (17) of the load carrying frame (10), to a second end (53) and wherein the steering device (50) further comprises a handlebar (54) arranged at the second end (53) of the bar (51),
and **characterised in that**, the steering device (50) is pivotally movable between a folded position, in which the steering device (50) extends in parallel with the first plane (A), and an extended position, in which the steering device (50) extends in a plane at an angle to the first plane (A).

2. The carrier (1) according to any one of the preceding claims, further comprising a support member (70) for the carrier (1), removably arrangeable at the carrier (1).

3. The carrier (1) according to claim 2, wherein the support member (70) is pivotally arrangeable at the carrier (1) and comprises support legs (74), which support legs (74) are pivotally movable between a support providing position and at least one non-support providing position, wherein at least one non-support providing position comprises a position in which the support legs (74) extend in parallel with the first plane (A) and wherein, in the support providing position, the support legs (74) extend in a plane essentially perpendicular to the first plane (A).

4. The carrier (1) according to any one of the preceding claims, further comprising a spoke protection assembly (40), releasably arrangeable at the load carrying frame (10) and arrangeable to partly cover the wheel (30) when arranged at the wheel receiving portion (80).

5. The carrier (1) according to any one of the preceding claims, wherein the carrier (1) further comprises a brake assembly including a brake controller (60) arranged at the steering device (50) and a brake actuator arranged between the first load carrying surface (11a) and the second load carrying surface (11b), wherein the brake actuator is disengageably coupled to the wheel (30) and operably connected to the brake controller (60).

6. The carrier (1) according to any one of the preceding claims, wherein the wheel (30) comprises a hub (33) and a quick release mechanism arranged at the hub (33), and wherein the wheel receiving portion (80) comprises two protrusions (81) extending perpendicularly from the first plane (A), each protrusion (81) comprising a slot (82) configured to receive the quick release mechanism.

7. The carrier (1) according to any one of the preceding claims, wherein the wheel (30) has a diameter of at least 60 cm.

8. The carrier (1) according to any one of the preceding claims, wherein the first load carrying surface (11a) and the second load carrying surface (11b) each comprises an outer frame (13a, 13b) and a load carrying platform (12a, 12b) extending over the outer frame (13a, 13b), wherein the load carrying platform (12a, 12b) of each of the first and second load carrying surfaces (11a, 11b) is removably arranged at the respective outer frame (13a, 13b).

9. The carrier (1) according to claim 8, wherein the load carrying platform (12a, 12b) of each of the first load carrying surface (11a) and the second load carrying surface (11b) is made of a durable fabric.

10. The carrier (1) according to any one of the preceding claims, wherein the load carrying frame (10) comprises a front portion (16) and a rear portion (17), wherein the steering device (50) is arranged at the rear portion (17) of the load carrying frame (50), and wherein a width (W) of each of the first and second load carrying surfaces (11a, 11b) is greater at the rear portion (17) of the load carrying frame (10) than at the front portion (16) of the load carrying frame (10).

11. The carrier (1) according to any one of the preceding claims, wherein each of the first and second load carrying surfaces (11a, 11b) extend beyond the wheel (30) both rearwardly and forwardly thereof.

12. A method for mounting a pre-assembled carrier for transporting loads over rough terrain, the method comprising the steps of:
providing a pre-assembled carrier (1) comprising a load carrying frame (1) defining a first load carrying surface (11a), a second load carrying surface (11b), and a wheel receiving portion (80) arranged between the first load carrying surface (11a) and the second load carrying surface (11b), wherein the first load carrying surface (11a) and the second load carrying surface (11b) are arranged in a same first plane (A), and wherein the load carrying frame (10) further comprises a steering device (50) pivotally arranged at the load carrying frame (10) in a folded position, in which the steering device (50) extends in parallel with the first plane (A); the steering device (50) comprising a bar (51) extending longitudinally from a first end (52), which first end (52) is centrally arranged at a rear portion (17) of the load carrying frame (10), to a second end (53) and the steering device (50) further comprising a handlebar (54) arranged at the second end (53) of the bar (51);
pivotally moving the steering device (50) to an extended position in which the steering device (50) extends in a plane at an angle to the first plane (A); and
releasably arranging a wheel (30) at the wheel receiving portion (80) of the load carrying frame (10) such that the centre of rotation of the wheel (30) is essentially in the first plane (A).

## Patentansprüche

1. Fahrgestell (1) zum Transportieren von Lasten wie beispielsweise Kinder über unwegsames Gelände, wobei das Fahrgestell (1) umfasst:
einen länglichen Lastentragerahmen (10) mit einer ersten Lastentragefläche (11a), einer zweiten Lastentragefläche (11b) und einem Radaufnahmeabschnitt (80), der zwischen der ersten Lastentragefläche (11a) und der zweiten Lastentragefläche (11b) angeordnet ist;
ein Rad (30), das lösbar am Radaufnahmeabschnitt (80) des Lastentragerahmens (10) anordenbar ist;
eine Lenkvorrichtung (50) zum Lenken des Fahrgestells (1), die schwenkbar am Lastentragerahmen (10) angeordnet ist;
wobei die erste Lastentragefläche (11a) und die zweite Lastentragefläche (11b) länglich ausgebildet und in derselben ersten Ebene (A) angeordnet sind und das Rad (30) senkrecht zur ersten Ebene (A) und mit seinem Drehpunkt im Wesentlichen in der ersten Ebene (A) anordenbar ist,
wobei die Lenkvorrichtung (50) eine Stange (51) umfasst, die sich in Längsrichtung von einem ersten Ende (52), das mittig an einem hinteren Abschnitt (17) des Lastentragerahmens (10) angeordnet ist, zu einem zweiten Ende (53) erstreckt, und wobei die Lenkvorrichtung (50) ferner einen Lenker (54) umfasst, der am zweiten Ende (53) der Stange (51) angeordnet ist,
und **dadurch gekennzeichnet ist, dass**
die Lenkvorrichtung (50) schwenkbar zwischen einer zusammengeklappten Position, in der sich die Lenkvorrichtung (50) parallel zur ersten Ebene (A) erstreckt, und einer ausgeklappten Position bewegbar ist, in der sich die Lenkvorrichtung (50) in einer Ebene in einem Winkel zur ersten Ebene (A) erstreckt.

2. Fahrgestell (1) nach einem der vorhergehenden Ansprüche, ferner umfassend ein Stützelement (70) für das Fahrgestell (1), das abnehmbar am Fahrgestell (1) anordenbar ist.

3. Fahrgestell (1) nach Anspruch 2, wobei das Stützelement (70) schwenkbar am Fahrgestell (1) anordenbar ist und Stützbeine (74) umfasst, die schwenkbar zwischen einer Stützposition und mindestens einer Nicht-Stützposition bewegbar sind, wobei mindestens eine Nicht-Stützposition eine Position umfasst, in der sich die Stützbeine (74) parallel zur ersten Ebene (A) erstrecken, und wobei sich die Stützbeine (74) in der Stützposition in einer Ebene im Wesentlichen senkrecht zur ersten Ebene (A) erstrecken.

4. Fahrgestell (1) nach einem der vorhergehenden Ansprüche, ferner umfassend eine Speichenschutzvorrichtung (40), die lösbar am Lastentragerahmen (10) anordenbar und so anordenbar ist, dass sie das Rad (30) teilweise abdeckt, wenn sie am Radaufnahmeabschnitt (80) angeordnet ist.

5. Fahrgestell (1) nach einem der vorhergehenden Ansprüche, wobei das Fahrgestell (1) ferner eine Bremsanordnung umfasst, die eine am Lenkmechanismus (50) angeordnete Bremssteuerung (60) und einen zwischen der ersten Lastentragefläche (11a) und der zweiten Lastentragefläche (11b) angeordneten Bremsaktuator aufweist, wobei der Bremsaktuator lösbar mit dem Rad (30) gekoppelt und funktional mit der Bremssteuerung (60) verbunden ist.

6. Fahrgestell (1) nach einem der vorhergehenden Ansprüche, wobei das Rad (30) eine Nabe (33) und einen an der Nabe (33) angeordneten Schnellspannmechanismus umfasst und wobei der Radaufnahmeabschnitt (80) zwei Vorsprünge (81) aufweist, die senkrecht von der ersten Ebene (A) abstehen, wobei jeder Vorsprung (81) einen Schlitz (82) zur Aufnahme des Schnellspannmechanismus aufweist.

7. Fahrgestell (1) nach einem der vorhergehenden Ansprüche, wobei das Rad (30) einen Durchmesser von mindestens 60 cm hat.

8. Fahrgestell (1) nach einem der vorhergehenden Ansprüche, wobei die erste Lastentragefläche (11a) und die zweite Lastentragefläche (11b) jeweils einen Außenrahmen (13a, 13b) und eine sich über den Außenrahmen (13a, 13b) erstreckende Lastentrageplattform (12a, 12b) umfassen, wobei die Lastentrageplattform (12a, 12b)von jeder der ersten und der zweiten Lastentragefläche (11a, 11b) abnehmbar am jeweiligen Außenrahmen (13a, 13b) angeordnet ist.

9. Fahrgestell (1) nach Anspruch 8, wobei die Lastentrageplattform (12a, 12b) von jeder der ersten Lastentragefläche (11a) und der zweiten Lastentragefläche (11b) jeweils aus einem strapazierfähigen Stoff hergestellt ist.

10. Fahrgestell (1) nach einem der vorhergehenden Ansprüche, wobei der Lastentragerahmen (10) einen vorderen Abschnitt (16) und einen hinteren Abschnitt (17) umfasst, wobei die Lenkvorrichtung (50) am hinteren Abschnitt (17) des Lastentragerahmens (10) angeordnet ist und wobei eine Breite (W) jeder der ersten und der zweiten Lastentragefläche (11a, 11b) am hinteren Abschnitt (17) des Lastentragerahmens (10) größer ist als am vorderen Abschnitt (16) des Lastentragerahmens (10).

11. Fahrgestell (1) nach einem der vorhergehenden Ansprüche, wobei sich jede der ersten und der zweiten Lastentragefläche (11a, 11b) sowohl nach hinten als auch nach vorne über das Rad (30) hinaus erstreckt.

12. Verfahren zum Zusammenbauen eines vormontierten Fahrgestells zum Transport von Lasten in unwegsamem Gelände, wobei das Verfahren die Schritte umfasst:
Bereitstellen eines vormontierten Fahrgestells (1) mit einem Lastentragerahmen (10), der eine erste Lastentragefläche (11a), eine zweite Lastentragefläche (11b) und einen Radaufnahmeabschnitt (80), der zwischen der ersten Lastentragefläche (11a) und der zweiten Lastentragefläche (11b) angeordnet ist, aufweist, wobei die erste Lastentragefläche (11a) und die zweite Lastentragefläche (11b) in derselben ersten Ebene (A) liegen und wobei der Lastentragerahmen (10) ferner eine Lenkvorrichtung (50) umfasst, die schwenkbar am Lastentragerahmen (10) in einer zusammengeklappten Position angeordnet ist, in der sich die Lenkvorrichtung (50) parallel zur ersten Ebene (A) erstreckt; wobei die Lenkvorrichtung (50) eine Stange (51) umfasst, die sich in Längsrichtung von einem ersten Ende (52), das mittig an einem hinteren Abschnitt (17) des Lastentragerahmens (10) angeordnet ist, zu einem zweiten Ende (53) erstreckt, und wobei die Lenkvorrichtung (50) ferner einen Lenker (54) umfasst, der am zweiten Ende (53) der Stange (51) angeordnet ist;
schwenkendes Bewegen der Lenkvorrichtung (50) in einer ausgeklappten Position, in der sich die Lenkvorrichtung (50) in einer Ebene unter einem Winkel zur ersten Ebene (A) erstreckt; und
lösbares Anordnen eines Rades (30) am Radaufnahmeabschnitt (80) des Lastentragerahmens (10), so dass sich der Drehpunkt des Rades (30) im Wesentlichen in der ersten Ebene (A) befindet.

## Revendications

1. Chariot (1) pour le transport de charges telles que des enfants sur un terrain accidenté, le chariot (1) comprenant :
un cadre porteur de charge (10) allongé comprenant une première surface porteuse de charge (11a), une seconde surface porteuse de charge (11b) et une partie recevant une roue (80) disposée entre la première surface porteuse de charge (11a) et la seconde surface porteuse de charge (11b) ;
une roue (30) pouvant être disposée de manière séparable au niveau de la partie recevant une roue (80) du cadre porteur de charge (10) ;
un dispositif de direction (50) pour diriger le chariot (1), disposé de manière pivotante au niveau du cadre porteur de charge (10) ;
dans lequel la première surface porteuse de charge (11a) et la seconde surface porteuse de charge (11b) sont allongées et disposées dans un même premier plan (A) et la roue (30) peut être disposée perpendiculairement au premier plan (A) et avec son centre de rotation essentiellement dans le premier plan (A),
dans lequel le dispositif de direction (50) comprend une barre (51) s'étendant longitudinalement depuis une première extrémité (52), laquelle première extrémité (52) est disposée au centre d'une partie arrière (17) du cadre porteur de charge (10), jusqu'à une seconde extrémité (53), et dans lequel le dispositif de direction (50) comprend en outre un guidon (54) disposé à la seconde extrémité (53) de la barre (51),
et **caractérisé en ce que** le dispositif de direction (50) peut être pivoté entre une position repliée, dans lequel le dispositif de direction (50) s'étend parallèlement au premier plan (A), et une position étendue, dans lequel le dispositif de direction (50) s'étend dans un plan en formant un angle avec le premier plan (A).

2. Chariot (1) selon l'une quelconque des revendications précédentes, comprenant en outre un élément d'appui (70) pour le chariot (1), pouvant être disposé de manière amovible sur le chariot (1).

3. Chariot (1) selon la revendication 2, dans lequel l'élément d'appui (70) peut être disposé de manière pivotante sur le chariot (1) et comprend des pieds d'appui (74), lesquels pieds d'appui (74) peuvent être pivotés entre une position d'appui et au moins une position de non-appui, dans lequel au moins une position de non-appui comprend une position dans lequel les pieds d'appui (74) s'étendent parallèlement au premier plan (A) et dans lequel, dans la position d'appui, les pieds d'appui (74) s'étendent dans un plan essentiellement perpendiculaire au premier plan (A).

4. Chariot (1) selon l'une quelconque des revendications précédentes, comprenant en outre un ensemble de protection des rayons (40) pouvant être disposé de manière séparable sur le cadre porteur de charge (10) et pouvant être disposé de manière à couvrir partiellement la roue (30) lorsqu'il est disposé au niveau de la partie recevant une roue (80).

5. Chariot (1) selon l'une quelconque des revendications précédentes, dans lequel le chariot (1) comprend en outre un ensemble de freinage incluant une commande de frein (60) disposée sur le dispositif de direction (50) et un actionneur de freinage disposé entre la première surface porteuse de charge (11a) et la seconde surface porteuse de charge (11b), dans lequel l'actionneur de freinage est accouplé de manière débrayable à la roue (30) et relié de manière opérationnelle à la commande de frein (60).

6. Chariot (1) selon l'une quelconque des revendications précédentes, dans lequel la roue (30) comprend un moyeu (33) et un mécanisme de libération rapide disposé sur le moyeu (33), et dans lequel la partie recevant une roue (80) comprend deux saillies (81) s'étendant perpendiculairement au premier plan (A), chaque saillie (81) comprenant une encoche (82) configurée pour recevoir le mécanisme de libération rapide.

7. Chariot (1) selon l'une quelconque des revendications précédentes, dans lequel la roue (30) a un diamètre d'au moins 60 cm.

8. Chariot (1) selon l'une quelconque des revendications précédentes, dans lequel la première surface porteuse de charge (11a) et la seconde surface porteuse de charge (11b) comprennent chacune un cadre extérieur (13a, 13b) et une plateforme porteuse de charge (12a, 12b) s'étendant au-delà du cadre extérieur (13a, 13b), dans lequel la plateforme porteuse de charge (12a, 12b) de chacune de la première et seconde surface porteuse de charge (11a, 11b) est disposée de manière amovible au niveau du cadre extérieur (13a, 13b) respectif.

9. Chariot (1) selon la revendication 8, dans lequel la plateforme porteuse de charge (12a, 12b) de chacune des première surface porteuse de charge (11a) et seconde surface porteuse de charge (11b) est réalisée en tissu durable.

10. Chariot (1) selon l'une quelconque des revendications précédentes, dans lequel le cadre porteur de charge (10) comprend une partie avant (16) et une partie arrière (17), dans lequel le dispositif de direction (50) est disposé au niveau de la partie arrière (17) du cadre porteur de charge (10) et dans lequel une largeur (W) de chacune des première et seconde surfaces porteuses de charge (11a, 11b) est plus grande dans la partie arrière (17) du cadre porteur de charge (10) que dans la partie avant (16) du cadre porteur de charge (10).

11. Chariot (1) selon l'une quelconque des revendications précédentes, dans lequel chacune des première et seconde surfaces porteuses de charge (11a, 11b) s'étend au-delà de la roue (30), aussi bien vers l'arrière que vers l'avant de celle-ci.

12. Procédé de montage d'un chariot pré-assemblé de transport de charges sur un terrain accidenté, méthode comprenant les étapes de :
fourniture d'un chariot (1) pré-assemblé, comprenant un cadre porteur de charge (10) définissant une première surface porteuse de charge (11a), une seconde surface porteuse de charge (11b) et une partie recevant une roue (80) disposée entre la première surface porteuse de charge (11a) et la seconde surface porteuse de charge (11b), dans lequel la première surface porteuse de charge (11a) et la seconde surface porteuse de charge (11b) sont disposées dans un même premier plan (A), et dans lequel le cadre porteur de charge (10) comprend en outre un dispositif de direction (50) disposé de manière pivotante au niveau du cadre porteur de charge (10) en position repliée, dans lequel le dispositif de direction (50) s'étend parallèlement au premier plan (A) ; le dispositif de direction (50) comprenant une barre (51) s'étendant longitudinalement depuis une première extrémité (52), laquelle première extrémité (52) est disposée au centre d'une partie arrière (17) du cadre porteur de charge (10), jusqu'à une seconde extrémité (53), et le dispositif de direction (50) comprenant en outre un guidon (54) disposé à la seconde extrémité (53) de la barre (51) ;
pivotement du dispositif de direction (50) en une position étendue dans lequel le dispositif de direction (50) s'étend dans un plan en formant un angle avec le premier plan (A) ; et
disposition de manière séparable d'une roue (30) au niveau de la partie recevant une roue (80) du cadre porteur de charge (10) de manière à ce que le centre de rotation de la roue (30) se situe essentiellement dans le premier plan (A).
